(19) Europäisches Patentamt
European Patent Office
Office européen des brevets

(11) EP 3 484 934 B1

(12) # FASCICULE DE BREVET EUROPEEN

(45) Date de publication et mention de la délivrance du brevet:
**02.09.2020 Bulletin 2020/36**

(21) Numéro de dépôt: **17745441.0**

(22) Date de dépôt: **17.07.2017**

(51) Int Cl.:
***C08F 236/02*** *(2006.01)* ***C08F 236/10*** *(2006.01)*
***B60C 1/00*** *(2006.01)*

(86) Numéro de dépôt international:
**PCT/FR2017/051943**

(87) Numéro de publication internationale:
**WO 2018/015645 (25.01.2018 Gazette 2018/04)**

(54) **ÉLASTOMÈRE DIENIQUE COMPRENANT DES FONCTIONS CARBONATES PENDANTES**

DIENELASTOMER MIT HÄNGENDEN FUNKTIONELLEN CARBONATGRUPPEN

DIENE ELASTOMER COMPRISING PENDANT CARBONATE FUNCTIONAL GROUPS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.07.2016 FR 1656823**

(43) Date de publication de la demande:
**22.05.2019 Bulletin 2019/21**

(73) Titulaire: **Compagnie Générale des Etablissements Michelin**
**63000 Clermont-Ferrand (FR)**

(72) Inventeurs:
- **JEAN-BAPTISTE-DIT-DOMINIQUE, François**
**63040 Clermont-Ferrand Cedex 9 (FR)**
- **MATMOUR, Rachid**
**63040 Clermont-Ferrand Cedex 9 (FR)**

(74) Mandataire: **Gandon-Pain, Sylvie**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A1- 0 001 088 EP-A1- 0 894 825**
**EP-A1- 2 452 952 FR-A1- 2 951 184**

- **DATABASE WPI Week 201226 Thomson Scientific, London, GB; AN 2012-D93621 XP002763890, & WO 2012/043136 A1 (JSR CORP) 5 avril 2012 (2012-04-05)**
- **L.SOOS, GY. DEAK, S. KEKI, M. ZSUGA: "Anionic Bulk Oligomerization of Ethylene and Propylene Carbonate Initiated by Bisphenol-A/Base Systems", JOURNAL OF POLYMER SCIENCE: PART A: POLYME CHEMISTRY, vol. 37, no. 5, 1 mars 1999 (1999-03-01), - 1 mars 1999 (1999-03-01), pages 545-550, XP002763772,**
- **DEAN C. WEBSTER: "Cyclic carbonate functinal polymers and their applications", PROGRESS IN ORGANIC COATINGS, vol. 47, 1 juillet 2003 (2003-07-01), pages 77-86, XP002763773, DOI: 10.1016/S0300-9449(03)00074-2**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 484 934 B1

## Description

Le domaine de la présente invention est celui des élastomères diéniques portant des fonctions pendantes le long de chaîne élastomère, y compris en dehors des extrémités de la chaîne élastomère.

La modification de la structure chimique d'un élastomère impacte généralement les propriétés chimiques et physiques de l'élastomère, ainsi que les propriétés des compositions de caoutchouc le contenant. Par exemple, il est connu de la demande de brevet WO 2001090237 qu'un élastomère diénique portant des fonctions acides carboxyliques pendantes le long de la chaîne améliore le renforcement d'une composition de caoutchouc contenant une charge renforçante comme la silice. Il est également connu que le renforcement d'une composition de caoutchouc comprenant un élastomère diénique et une silice requiert l'utilisation d'un agent de couplage comme cela est décrit dans les demandes de brevet des Demanderesses, en particulier dans le document WO 2001090237 mentionné précédemment. Pour des raisons de coût de production de la composition, il peut être aussi d'intérêt de supprimer l'agent de couplage.

Par conséquent, il est toujours une préoccupation de pouvoir disposer de nouveaux élastomères fonctionnels qui permettent d'améliorer le renforcement d'une composition de caoutchouc comprenant une charge renforçante.

Des polymères diéniques portant des fonctions carbonates -O-CO-O- présentes dans des groupes carbonates cycliques en dehors des extrémités de la chaîne polymère sont connus pour être utilisés comme électrolytes notamment dans des membranes. Ils sont synthétisés par un procédé qui comprend au moins deux étapes : la première est une réaction d'époxydation des unités diéniques, la deuxième est une réaction de modification des unités diéniques époxydées en unités portant une fonction carbonate, comme cela est décrit par exemple dans les documents US 20070191578 et WO 2014032803. Dans le polymère ainsi modifié, des fonctions carbonates sont présentes dans des motifs encombrés, puisque les deux atomes d'oxygène en alpha du carbonyle du groupe carbonate cyclique sont directement rattachés aux atomes de carbone de l'unité diénique modifiée. Cet encombrement peut causer une moindre réactivité de la fonction carbonate vis-à-vis d'une charge renforçante.

Les Demanderesses ont découvert un nouvel élastomère diénique portant des groupes carbonates cycliques réactifs vis-à-vis d'une charge renforçante et améliorant le renforcement d'une composition de caoutchouc comprenant une charge renforçante, même en l'absence d'agent de couplage dans le cas où la charge renforçante est une silice.
Ainsi un premier objet de l'invention est un élastomère comprenant des unités monomères 1,3-diène et portant des fonctions carbonates pendantes situées en dehors des extrémités de chaîne de l'élastomère, les fonctions carbonates étant présentes dans des unités monomères d'un monomère vinylique au moins substitué par un groupe contenant un cycle 1,3-dioxolan-2-one.

L'invention concerne aussi un procédé permettant la synthèse de l'élastomère diénique conforme à l'invention, lequel procédé comprend la polymérisation radicalaire d'un monomère 1,3-diène, d'un monomère vinylique au moins substitué par un groupe contenant un cycle 1,3-dioxolan-2-one.

## I. DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties d'élastomère (du total des élastomères si plusieurs élastomères sont présents).

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les élastomères, les plastifiants, les charges....

Dans la présente demande, on entend par fonction carbonate le groupe de formule -O(C=O)O-. La fonction carbonate utile aux besoins de l'invention se trouve dans une structure cyclique, puisqu'elle est présente sous la forme du cycle 1,3-dioxolan-2-one.

Dans la présente demande, on entend par unité monomère 1,3-diène, une unité qui résulte de l'insertion d'un monomère 1,3-diène dans une chaîne élastomère en croissance. De façon connue, les unités d'un monomères 1,3-diène peuvent résulter d'une insertion 1,2 ou 1,4 du monomère 1,3-diène dans la chaîne élastomère. Dans le cas d'une insertion 1,4, elles peuvent se présenter sous la configuration cis ou trans.

Dans la présente demande, le mot (méth)acrylate désigne indifféremment acrylate ou méthacrylate.

Dans la présente demande, on entend par charge renforçante tout type de charge dite renforçante connue pour ses capacités à renforcer une composition de caoutchouc utilisable pour la fabrication de pneumatiques, par exemple une charge organique telle que du noir de carbone, une charge inorganique renforçante telle que de la silice à laquelle est associé généralement de manière connue un agent de couplage, ou encore un mélange de ces deux types de charge. Une telle charge renforçante consiste typiquement en des nanoparticules dont la taille moyenne (en

masse) est inférieure au micromètre, généralement inférieure à 500 nm, le plus souvent comprise entre 20 et 200 nm, en particulier et plus préférentiellement comprise entre 20 et 150 nm.

L'élastomère conforme à l'invention a pour caractéristique essentielle de comprendre des unités monomères 1,3-diène. A titre de monomère 1,3-diène, on peut citer ceux ayant 4 à 8 atomes de carbone, comme par exemple le 1,3-butadiène, le 2,3-diméthyl-1,3-butadiène, l'isoprène, le pipérylène. Conviennent également leurs dérivés halogénés, comme par exemple le chloroprène. Le monomère 1,3-diène peut aussi consister en un mélange de ces monomères, auquel les unités monomères 1,3-diène sont constituées des unités monomères de chacun des monomères composant le mélange. De préférence, le 1,3-diène est le 1,3-butadiène, l'isoprène ou leur mélange. De manière plus préférentielle, le 1,3-diène est le 1,3-butadiène.

Selon l'un quelconque des modes de réalisation de l'invention, les unités monomères 1,3-diène représentent de préférence plus de 50% en masse de l'élastomère.

Selon l'un quelconque des modes de réalisation de l'invention, les unités monomères 1,3-diène résultant d'une insertion 1,4 dans la chaîne élastomère représentent préférentiellement plus de 15%, plus préférentiellement plus de 30% en mole des unités monomères 1,3-diène.

L'élastomère diénique conforme à l'invention a aussi pour caractéristique essentielle de porter des fonctions carbonates pendantes situées en dehors des extrémités de chaîne de l'élastomère, les fonctions carbonate étant présentes dans des unités monomères d'un monomère vinylique au moins substitué par un groupe contenant un cycle 1,3-dioxolan-2-one. La présence de cycles 1,3-dioxolane-2-one pendants et situés en dehors des extrémités de chaîne de l'élastomère est essentielle pour conférer à l'élastomère diénique les propriétés de renforcement dans une composition de caoutchouc contenant une charge renforçante, même en l'absence d'un agent de couplage dans le cas où la charge renforçante est une silice. Dans la présente description, l'expression « pendant » relatif à la fonction carbonate est utilisé dans le même sens que le terme « pendant » utilisé dans la définition de « groupe pendant » donnée par IUPAC, PAC, 1996, 68, 2287.

Le monomère vinylique est préférentiellement un monomère vinylique contenant le groupe 2-oxo-1,3-dioxolan-4-yle de formule (I).

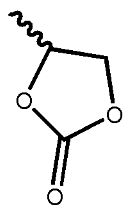

(I)

L'homme du métier comprend que le symbole 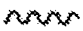 utilisé dans la formule (I) représente un rattachement du CH du cycle au monomère vinylique.

De manière plus préférentielle, le monomère vinylique présente le motif CH2=C<. La présence de ce motif dans le monomère vinylique favorise la copolymérisation du monomère vinylique avec le 1,3-diène dans la synthèse de l'élastomère conforme à l'invention.

Selon un mode de réalisation particulier, le monomère vinylique est un monomère (méth)acrylate de formule (II). Le monomère vinylique peut être aussi un mélange de (méth)acrylate de formule (II) qui se différencient les uns des autres par les groupes $R_1$ ou $R_2$.

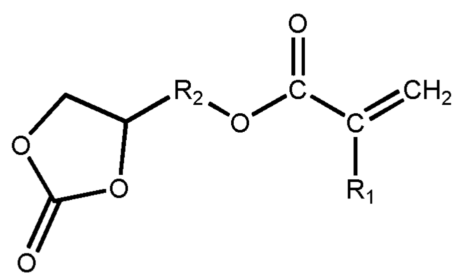

(II)

dans laquelle

$R_1$ est un hydrogène ou un méthyle,
$R_2$ est une chaîne hydrocarbonée pouvant être interrompue ou substituée par un ou plusieurs hétéroatomes.

De préférence, le monomère (méth)acrylate de formule (II) est choisi dans le groupe constitué par les composés de formule (III), (IV), (V) et leurs mélanges.

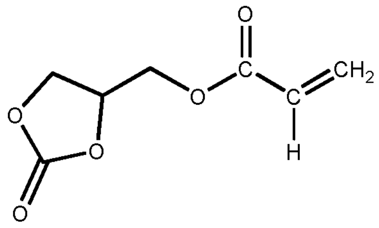

(III)

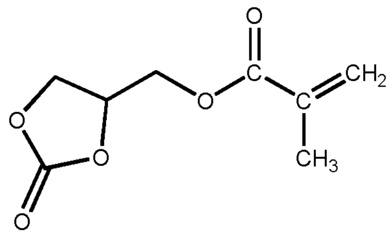

(IV)

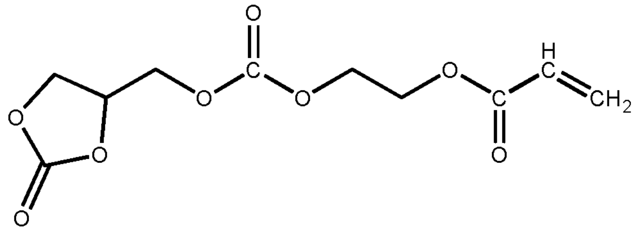

(V)

De manière plus préférentielle, le monomère (méth)acrylate de formule (II) est le composé de formule (III), le composé de formule (IV) ou leur mélange.

En présence d'une charge comme un noir de carbone ou une silice dans une composition de caoutchouc, il est supposé que les fonctions carbonate établissent des interactions avec la charge par l'intermédiaire de fonctions chimiques présentes sur la charge.

Le taux de fonctions carbonate utiles aux besoins de l'invention est compris de préférence entre 0.1 et 20 moles pour 100 moles d'unités monomères constituant l'élastomère. En deçà de la valeur de 0.1, l'amélioration du renforcement dans une composition de caoutchouc peut être jugé insuffisante pour certaines applications, par exemple dans le pneumatique. Au-delà de la valeur de 20, l'amélioration du renforcement s'accompagne d'une rigidification de la composition de caoutchouc qui peut être jugée trop forte pour certaines applications dans le pneumatique. Pour certaines applications, le taux de fonctions carbonate est plus préférentiellement compris entre 0.1 et 5 moles pour 100 moles d'unités monomères constituant l'élastomère.

Selon un mode de réalisation de l'invention, l'élastomère conforme à l'invention contient des unités d'un monomère vinylaromatique. Comme monomère vinylaromatique conviennent par exemple le styrène et les composés aromatiques comportant une double liaison polymérisable par voie radicalaire, comme par exemple les composés issus de l'alkylation du styrène, de l'halogénation du styrène, de l'haloalkylation du styrène et les dérivés éthers du styrène. De préférence, le monomère vinylaromatique est le styrène.

Selon ce mode de réalisation particulier de l'invention, les unités du monomère vinylaromatique représentent de préférence moins de 45% en masse de l'élastomère, préférentiellement moins de 35% en masse de l'élastomère.

Selon une première variante préférentielle de l'invention, l'élastomère conforme à l'invention est un copolymère d'un 1,3-diène et d'un monomère vinylique au moins substitué par un groupe contenant un cycle 1,3-dioxolan-2-one, le 1,3-diène et le monomère vinylique étant définis selon l'un quelconque des modes de réalisation de l'invention.

Selon une deuxième variante préférentielle de l'invention, l'élastomère conforme à l'invention est un terpolymère d'un 1,3-diène, d'un monomère vinylique au moins substitué par un groupe contenant un cycle 1,3-dioxolan-2-one et d'un monomère vinylaromatique, le 1,3-diène, le monomère vinylique et le monomère vinylique étant définis selon l'un quelconque des modes de réalisation de l'invention

Les modes préférentiels déclinés dans les modes de réalisation de l'invention décrits précédemment peuvent aussi s'appliquer autant à la première qu'à la deuxième variante.

Selon l'un quelconque des modes de réalisation de l'invention, la fonction carbonate peut être apportée le long de la chaîne de l'élastomère par polymérisation radicalaire d'un mélange monomère contenant le 1,3-diène et le monomère vinylique au moins substitué par un groupe contenant un cycle 1,3-dioxolan-2-one, et le cas échéant le monomère vinylaromatique.

Selon le procédé conforme à l'invention pour préparer l'élastomère, le monomère 1,3-diène est de préférence le 1,3-butadiène, l'isoprène ou leur mélange ; le monomère vinylique au moins substitué par un groupe contenant un cycle 1,3-dioxolan-2-one est de préférence un (méth)acrylate de formule (II), de manière plus préférentielle un composé

choisi dans le groupe constitué par les composés de formule (III), (IV), (V) et leurs mélanges, de manière encore plus préférentielle un composé de formule (III), un composé de formule (IV) ou leur mélange ; le monomère vinylaromatique est de préférence le styrène.

La polymérisation radicalaire peut être menée en suspension ou en émulsion, de préférence en émulsion pour favoriser l'uniformité de la taille des particules et l'obtention de chaines macromoléculaires de haut poids moléculaires.

Pour amorcer le mécanisme de polymérisation radicalaire, il est possible d'utiliser l'ensemble des amorceurs de radicaux libres usuels. Les amorceurs de radicaux peuvent être le peroxyde d'hydrogène, des peroxydes organiques tels que le peroxyde de cyclohexanone, le peroxyde de benzoyle, le peroxyde de lauroyle, l'hydroperoxyde de tert-butyle, l'hydroperoxyde de cumène, l'hydroperoxyde de p-menthane, le peroxyde de di-tert-butyle et le peroxyde de dicumyle, des composés azoïques tel que l'azobisisobutyronitrile ou le dihydrochlorure de 2,2 '-azo-bis-(2-methylpropionamidino), des peroxydes inorganiques, comme le persulfate de potassium, de sodium ou d'ammonium.

Les composés mentionnés ci-dessus peuvent également être utilisés dans des systèmes redox, dans lesquels des sels de métaux de transition, comme le sulfate ferreux ou le pyrophosphate de fer(II) sont impliqués. De manière préférée, le ou les sels de métaux de transition représentent de 0.01 à 10 pce, de préférence de 0.1 à 5 pce. Ces sels de métaux de transition peuvent être éventuellement associés à des agents réducteurs. A titre d'agent réducteur, on peut citer le formaldéhyde-sulfoxylate de sodium dihydraté (Rongalit®), le mélange technique de di-sodium de 2-hydroxy-2-sulfinate, de di-sodium de 2-hydroxy-2-sulfonate et du sulfite de sodium (Bruggolite FF6® ou Bruggolite FF7®), le but-1-ène-3-ol, les sels d'hydroxylamine, le sodium dialkyldithiocarbamate, le bisulfite de sodium, le bisulfite d'ammonium, le dithionite de sodium, l'acide ascorbique, l'acide tartrique, l'acide érythorbique, l'acide borique, l'urée, l'acide formique. De manière préférée, le ou les sels de métaux de transition représentent de 0.01 à 10 pce, en particulier de 0.1 à 5 pce.

Les amorceurs peuvent être utilisés seuls ou en combinaison de deux ou plus. De manière préférée, le ou les amorceurs représentent de 0.1 à 10 pce, en particulier de 0.2 à 10 pce, plus préférentiellement de 0.2 à 5 pce. L'amorceur peut être ajouté au milieu de polymérisation soit en totalité ou partiellement au début et/ou en continu ou de façon intermittente au cours de la polymérisation.

De manière connue pour contrôler le taux de gel et la macrostructure de l'élastomère, des agents de transfert peuvent être introduits dans le milieu de polymérisation et la conversion des monomères est de préférence limitée à 75%. A titre d'agents de transfert on peut citer les mercaptans de longueur de chaîne en C10-C14 tels que le n-dodécylmercaptan, le tert-dodécyl mercaptan, l'acide mercaptopropionique, le méthyl mercaptopropionate, ou les alcools ou des aldéhydes tels que l'isopropanol et l'acétaldéhyde, le diterpène, le terpinolène ou le gamma-terpinène et les thioglycols. De manière préférée, le ou les amorceurs représentent de 0.1 à 10 pce, de préférence de 0.2 à 10 pce, en particulier 0.2 à 5 pce.

Pour stabiliser l'émulsion aqueuse, on utilise aussi de manière connue des agents tensioactifs. Le ou les agents tensioactifs utilisables dans le procède selon l'invention peuvent être choisis parmi les agents tensioactifs non ioniques, anioniques ou cationiques préférentiellement parmi les agents tensioactifs anioniques ou cationiques. A titre d'agents tensioactifs anioniques, on peut notamment citer tous les agents tensioactifs anioniques comprenant au moins un groupe alkyle en C6 -C40 ou au moins un cycle aromatique substitué par un groupe alkyle en C6 -C40, et au moins un groupe anionique choisi parmi les sulfates, les sulfonates, les phosphates, les phosphonates, et les carboxylates. De préférence, le ou les agents tensioactifs anioniques comprenant au moins un groupe alkyle en C6 -C40 ou au moins un cycle aromatique substitué par un groupe alkyle en C6 -C40 sont choisis parmi le stéarate de sodium, le laurylsulfate de sodium, le lauryléther sulfate de sodium, les acides résiniques déshydrogénés ainsi que leurs sels de métaux alcalins et les dodécylbenzene sulfonates de sodium et les mélanges de ces composés. A titre d'agents tensioactifs cationiques, on peut notamment citer tous les agents tensioactifs cationiques comprenant au moins un groupe alkyle en C6 -C40 ou au moins un cycle aromatique substitué par un groupe alkyle en C6 -C40, et au moins un groupe cationique choisi parmi les ammoniums et les pyridiums. De préférence, le ou les agents tensioactifs cationiques sont choisis parmi les sels d'alkyltriméthylammonium tels que le chlorure ou le bromure de triméthyldecylammonium et les sels de benzalkonium et les mélanges de ces composés. De manière préférée, le ou lesdits agents tensioactifs utilisables dans le procédé selon l'invention sont choisis parmi le chlorure de triméthyldécylammonium, le sodium dodécylsulfate et le stéarate de sodium. De manière préférée, le ou les agents tensioactifs représentent de 1 à 20 pce, en particulier préférence de 1 à 10 pce.

Egalement de manière connue pour éviter la dégradation possible de l'amorceur en stabilisant le pH de l'émulsion, on peut utiliser un tampon. A titre d'exemple, on peut citer les tampons phosphate tels que le mélange de dihydrogénophosphate d'ammonium et d'hydrogénophosphate de di-sodium De manière préférée, dans le cas où le ou les tampons sont incorporés au milieu réactionnel, ils représentent de 1 à 20 pce, en particulier de 1 à 10 pce.

Le procédé de polymérisation est généralement conduit dans un réacteur dépourvu d'oxygène à une température de polymérisation variant de 0 à 100°C, préférentiellement de 5 à 70°C, plus préférentiellement entre 5 et 10°C ou entre 35 et 60°C et avec éventuellement des changements de température graduelle ou par pallier. La polymérisation peut être réalisée en continu ou en discontinu.

Afin de stopper la réaction de polymérisation à la bonne conversion, de manière connue, on introduit typiquement un réducteur, le stoppeur. A titre d'exemple, on peut citer la famille des phénols tels que l'hydroquinone, le résorcinol, les hydroxylamines telles que la N, N-diéthylhydroxylamine. De manière préférée, le ou les stoppeurs représentent de 0.05 à 5 pce, en particulier de 0,1 à 3 pce.

Une fois synthétisé, l'élastomère conforme à l'invention peut être aussi bien à l'état de latex qu'à l'état solide par exemple pour être mélangé à une charge renforçante en vue de préparer un mélange maître (en anglais « masterbatch »).

Pour récupérer l'élastomère en phase latex et sans monomères résiduels, il est préférable de réaliser une étape de dévolatilisation de ces monomères le plus généralement par entrainement à la vapeur d'eau (stripping). Pour récupérer l'élastomère sous forme solide, il est nécessaire d'ajouter une étape de déstabilisation de l'émulsion avec ou sans une étape de stripping au préalable et une étape de séchage du coagulum.

Pour éviter une ouverture des fonctions carbonates cycliques, il est préférable de réaliser la déstabilisation par l'addition d'un tiers corps, par exemple un sel inorganique tel que du chlorure de calcium, de magnésium, de potassium ou de sodium, du sulfate de sodium, de magnésium ou de sodium ou d'un sel organique tel que de l'acétate de magnésium ou de calcium. La coagulation du latex peut être également réalisée par l'addition d'un solvant choisi parmi les cétones et les alcools et notamment l'acétone, le méthanol, l'isopropanol, le n-butanol et l'éthanol. Le coagulum est ensuite généralement lavé à l'eau.

Le procédé peut comprendre en outre une étape de séchage de l'élastomère, une fois coagulé De préférence, l'élastomère peut être séché sous vide ou à pression atmosphérique sous balayage d'azote. Les températures de séchage peuvent varier de la température ambiante (25°C) à 130°C, préférentiellement de la température ambiante à 100°C, et encore plus préférentiellement de la température ambiante à 70°C. Les temps de séchage sont typiquement compris entre 10 et 72 h, de préférence entre 16 h et 50 h.

Les caractéristiques précitées de la présente invention, ainsi que d'autres, seront mieux comprises à la lecture de la description suivante de plusieurs exemples de réalisation de l'invention, donnés à titre illustratif et non limitatif.

## II. **EXEMPLES DE REALISATION DE L'INVENTION**

### **II.1-Mesures et tests utilisés :**

II.1-1 Détermination de la température de transition vitreuse :

Les températures de transition vitreuse Tg des élastomères sont mesurées au moyen d'un calorimètre différentiel ("Differential Scanning Calorimeter") selon la norme ASTM D3418-08.

Chromatographie d'exclusion stérique (SEC) :

La chromatographie d'exclusion stérique (ou Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier. Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité ou polydispersité (Ip = Mw/Mn) calculé via un étalonnage dit de MOORE. Il n'y a pas de traitement particulier de l'échantillon de polymère avant analyse. Celui-ci est simplement solubilisé, dans une solution de tétrahydrofurane contenant 1 % en volume de diisopropylamine, 1 % en volume de triéthylamine et 1 % en volume d'eau distillée à une concentration d'environ 1 g/l. Puis, la solution est filtrée sur filtre de porosité 0,45 $\mu$m avant injection. L'appareillage utilisé est un chromatographe « WATERS alliance ». Le solvant d'élution est du tétrahydrofurane contenant 1 % en volume de diisopropylamine et 1 % en volume de triéthylamine. Le débit est de 0,7 ml/min, la température du système est de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ». Le volume injecté de la solution de l'échantillon de polymère est 100 $\mu$l. Le détecteur est un réfractomètre différentiel « WATERS 2410 » et le logiciel d'exploitation des données chromatographiques est le système « WATERS EMPOWER ». Les masses molaires moyennes calculées sont relatives à une courbe d'étalonnage réalisée à partir de polystyrènes étalons commerciaux « PSS READY CAL-KIT ».

Détermination du taux de macrogel :

L'élastomère (masse prélevée P) est mis en solution dans le toluène à une concentration à 5 g/L. Le milieu est agité pendant 6 h minimum puis filtré sur un filtre métallique (grille inox) préalablement pesé (P1). Le filtre est ensuite

séché à 80°C sous vide pendant 1h puis refroidi dans un dessiccateur pendant 30 min. Après ce traitement la grille est pesée (P2).

Le taux d'insoluble est donné par la formule

$$T= 100*(P2-P1)/P$$

Spectroscopie de résonance magnétique nucléaire (RMN)

Les déterminations des taux de fonctions carbonate sur la chaîne élastomère sont réalisées par une analyse RMN. Les spectres sont acquis sur un spectromètre 500 MHz BRUKER équipé d'une sonde « large bande » BBIz-grad 5 mm. L'expérience RMN 1H quantitative, utilise une séquence simple impulsion 30° et un délai de répétition de 3 secondes entre chaque acquisition. Les échantillons sont solubilisés dans le chloroforme deuteré.

Le spectre RMN $^1H$ permet de quantifier le taux de fonction carbonate incorporée au sein de la chaine par intégration des signaux caractéristiques des protons des motifs unités. L'abréviation MCA désigne l'unité monomère de formule (IV-unité), PB1,2 et PB1,4 les unités monomères du 1,3-butadiène inséré dans la chaîne par addition 1,2 et 1,4 respectivement.

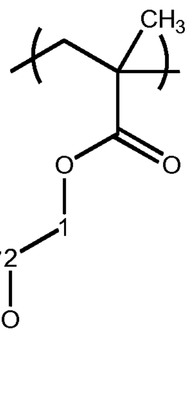

(IV-unité)

4H correspondant au $CH_2$ n°1 MCA + $CH_2$ n°3 MCA : de 3,3 à 4,5 ppm
2H+1H correspondant au PB1,2 + CH n°2 MCA : de 4,5 à 4,9 ppm
2H+1H correspondant au PB1,4 + PB1,2 : de 4,9 à 5,8 ppm
5H Motif Styrène : 7.41ppm à 6.5ppm.

Les résultats de répartition styrène sont donnés sous forme W/X/Y/Z avec :

W : n = 1, 2 et 3 (répartitions statistiques) : intégration entre 7,2 et 6,71 ppm
X : n = 4 et 5 (répartitions non statistiques) : intégration entre 6,71 et 6,56 ppm
Y : $6 \leq n \leq 10$ (microblocs) : intégration entre 6,56 et 6,29 ppm
Z : n > 10 (macroblocs) : intégration entre 6,29 et 6,05 ppm.

Essais de traction :

Ces essais permettent de déterminer les contraintes d'élasticité et les propriétés à la rupture après cuisson. Sauf indication différente, ils sont effectués conformément à la norme française NF T 46-002 de septembre 1988. On mesure en première élongation (i.e., sans cycle d'accommodation) les modules sécants vrais (i.e., calculés en se ramenant à la section réelle de l'éprouvette), exprimés en MPa, à 100% d'allongement (modules notés M100), à 300% d'allongement (M300). Toutes ces mesures de traction sont effectuées dans les conditions normales de température et d'hygrométrie (23 +- 2[deg.]C ; 50 +- 5% d'humidité relative).

Propriétés dynamiques :

Les propriétés dynamiques $\Delta G^*$ et $\tan(\delta)max$ sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm2 de section), soumis à une sollicitation sinusoïdale en cisaillement simple alterné,

à la fréquence de 10Hz, dans les conditions normales de température (23°C) selon la norme ASTM D 1349-99, ou selon les cas à une température différente (60°C).

On effectue un balayage en amplitude de déformation de 0,1% à 100% (cycle aller), puis de 100% à 0,1% (cycle retour). Les résultats exploités sont le module élastique (G').

**II.2-Réactifs**

Dans l'ensemble des exemples mentionnés ci-dessous, le sodium dodécylsulfate, le sulfate de fer, l'hydroperoxyde de cumène, le pyrophosphate de sodium, le potassium persulfate, le terdodécylmercaptan, la N, N-diéthylhydroxylamine, le résorcinol, l'hydrogéno-phosphate de sodium et le dihydrogénophosphate d'ammonium sont commercialisés par Aldrich. Le méthacrylate de 4-(hydroxyméthyl)-1,3-dioxolan-2-one provient de chez Specific Polymers. Le styrène et le butadiène sont purifiés par passage sur garde d'alumine et barbotage à l'azote.

**II.3-Synthèse de l'élastomère terpolymère de styrène, butadiène et de méthacrylate de 4-(hydroxyméthyl)-1,3-dioxolan-2-one (CCMA) par polymérisation à froid**

Préparation au préalable des charges suivantes :

- Suspension dans l'eau de $Na_2FeP_2O_7$ à 0,0627 mol/L : le $FeSO_4$, $7H_2O$ et le $Na_4P_2O_7$ sont dilués dans de l'eau barbotée, puis le mélange est chauffé à 60°C pendant 45 minutes en agitant régulièrement
- Préparation d'une solution d'hydroperoxyde de cumène dans le styrène à 0,079 mol/L
- Préparation d'une solution de mercaptan (R-SH) dans le styrène à 0,223 mol/L
- Préparation d'une solution de N,N-diéthylhydroxylamine dans l'eau à 10 g/L

On charge le réacteur selon les opérations suivantes :

- introduire l'eau barbotée pendant une demi-heure à 25°C (volume final 22,3 mL)
- puis le dodécylsulfate de sodium (SDS) sous azote à 25°C suivi d'un balayage à l'azote de 10 min (0,3 g)
- injecter la charge de styrène contenant le R-SH à 25°C sous azote (1 mL de solution à 0,223 mol/L)
- refroidir le réacteur pour atteindre 5°C
- quand le réacteur atteint environ 12°C, injecter le reste de styrène (1,815 mL, 1.65 g) et le CCMA (0,39 mL, 0,56g), sous azote
- injecter alors la charge de butadiène (9,88 mL, 6,42 g)
- laisser refroidir le réacteur jusqu'à 5°C, puis injecter la solution de $Na_2FeP_2O_7$ (1,7 mL de solution à 0,0627 mol/L)
- attendre 5 minutes, puis injecter l'amorceur, la solution d'hydroperoxyde de cumène dans le styrène (0,5 mL)

La fin de l'ajout de l'amorceur marque le début de la polymérisation (soit t=0 min).

L'agitation est maintenue à 5°C durant 7 h 15 pour atteindre environ 63 % de conversion finale (essai 1) et durant 4 h 45 pour atteindre environ 72 % de conversion finale (essai 2). Enfin, une solution de stoppage de N,N-diéthylhydroxylamine dans l'eau est préparée. Le latex est alors stoppé par transvasement par pression résiduelle des monomères sur cette solution de stoppage. Le latex est ensuite coagulé par addition de 50 mL d'acétone. Le coagulum est séché sous vide partiel et sous balayage d'azote pendant 48 h à 40°C.

Les conditions opératoires pour l'essai n°1 sont répertoriées dans le tableau 1 suivant. Les conditions opératoires pour l'essai n°2 sont répertoriées dans le tableau 2 suivant.

Tableau 1

| | | |
|---|---|---|
| Eau | | 22.3 mL |
| SDS | 3 pce | 0.3 g |
| RSH | 0,16 pce | 0.016 g |
| $FeSO_4$, $7H_2O$ | 0,28 pce | 0.028 g |
| $Na_4P_2O_7$ | 0,266 pce | 0.026 g |
| $\%_{massique}$ Styrène ($\%_{mol}$) | 30,14% (19%) | 3.014 g |
| $\%_{massique}$ Butadiène ($\%_{mol}$) | 64.23% (79%) | 6.42 g |
| $\%_{massique}$ CCMA ($\%_{mol}$) | 5,63% (2%) | 0.56 g |

(suite)

| | | |
|---|---|---|
| Hydroperoxide de cumène | 0,17 pce | 0.017 g |
| N,N-diéthylhydroxylamine | 0,1 pce | 0.01g |

Tableau 2

| | | |
|---|---|---|
| Eau | | 22.3 mL |
| SDS | 3 pce | 0.3 g |
| RSH | 0,16 pce | 0.016 g |
| $FeSO_4$, $7H_2O$ | 0,28 pce | 0.028 g |
| $Na_4P_2O_7$ | 0,266 pce | 0.026 g |
| $\%_{massique}$ Styrène ($\%_{mol}$) | 25,47% (18%) | 2.55 g |
| $\%_{massique}$ Butadiène ($\%_{mol}$) | 54.3% (74%) | 5.43 g |
| $\%_{massique}$ CCMA ($\%_{mol}$) | 20,23% (8%) | 2.02 g |
| Hydroperoxide de cumène | 0,17 pce | 0.017 g |
| N,N-diéthylhydroxylamine | 0,1 pce | 0.01g |

Les élastomères obtenus ont été caractérisés par les analyses RMN, DSC, SEC et la mesure du taux de macrogel. Les résultats des caractérisations figurent dans le tableau I.

**II.4-Préparation et caractérisation des compositions de caoutchouc** :

Pour préparer les compositions A et T, on procède pour les essais qui suivent de la manière suivante:
On introduit dans un mélangeur interne (taux de remplissage final environ 70% en volume), dont la température initiale de cuve est d'environ 100°C, successivement l'élastomère, la charge renforçante et les autres additifs. On conduit alors un travail thermomécanique (phase non-productive) en une étape (durée totale du malaxage égale à environ 5 min), jusqu'à atteindre une température maximale de "tombée" allant de 145 à 165°C selon les compositions. On récupère le mélange ainsi obtenu, on le refroidit puis on ajoute le système de vulcanisation sur un mélangeur externe pour y réaliser une seconde phase de travail mécanique à environ 80°C.
Les compositions de caoutchouc sont données dans le tableau 3 suivant. Les quantités sont exprimées en parties pour 100 parties en poids d'élastomère.
La composition A se différencie de la composition T en ce que la composition A contient en tant qu'élastomère l'élastomère A conforme à l'invention, alors que la composition T contient en tant qu'élastomère un copolymère de styrène et de butadiène SBR. Le SBR dépourvu de fonction carbonate est un élastomère non conforme à l'invention. Sa viscosité Mooney est de 53, sa Tg est de -48°C, similaire à celle de l'élastomère A. La viscosité Mooney est mesurée à l'aide d'un consistomètre oscillant tel que décrit dans la norme ASTM D1646 (1999). La mesure se fait selon le principe suivant : l'échantillon analysé à l'état cru (i.e., avant cuisson) est moulé (mis en forme) dans une enceinte cylindrique chauffée à une température donnée (100°C). Après 1 minute de préchauffage, le rotor tourne au sein de l'éprouvette à 2 tours/minute et on mesure le couple utile pour entretenir ce mouvement après 4 minutes de rotation. La viscosité Mooney est exprimée en "unité Mooney" (UM, avec 1 UM=0,83 Newton.mètre).
Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques. Les compostions calandrées sont ensuite cuites sous presse pendant 30 min à 150°C, puis caractérisées.
Les résultats figurent dans le tableau II.

Tableau 3

| | Composition A | Composition T |
|---|---|---|
| Elastomère A | 100 | - |
| SBR | - | 100 |

(suite)

| | Composition A | Composition T |
|---|---|---|
| Noir de carbone (1) | 1 | 1 |
| Silice (2) | 67 | 67 |
| Résine (3) | 31 | 31 |
| Antioxydant (4) | 3 | 3 |
| Paraffine | 1 | 1 |
| Triméthoxy(octyl)silane | 5,4 | 5,4 |
| Diphénylguanidine | 2,5 | 2,5 |
| Stéarine (5) | 3 | 3 |
| ZnO (6) | 0,9 | 0,9 |
| Soufre | 1 | 1 |
| Accélérateur (7) | 2.3 | 2.3 |

(1) N234
(2) Silice microperlée de surface spécifique de 160m$^2$ / g
(3) Résine dicyclopentadiène C9 hydrogénée E5600 BR, Exxon Mobil
(4) 1,3-diméthylbutyl-N-phényl-para-phénylènediamine ("Santoflex 6-PPD" société Flexsys)
(5) Stéarine ("Pristerene 4931" - société Uniqema)
(6) oxyde de zinc (grade industriel - société Umicore)
(7) N-cyclohexyl-2-benzothiazyl-sulfénamide ("Santocure CBS" société Flexys).

La mesure de ΔC (Cmax-Cmin) exprimé en dN.m correspond à la différence de couple entre l'état initial (t=0, avant vulcanisation) et l'état final (t=30 min, après vulcanisation).

En comparaison à l'élastomère SBR, l'élastomère A confère à la composition de caoutchouc un bien meilleur renforcement. En effet, le rapport des modules MA300/MA100 de la composition A est bien plus élevé que celui de la composition T. L'amélioration du renforcement est obtenue même en l'absence d'un agent de couplage pour coupler la silice à l'élastomère. Enfin, pour un renforcement amélioré, on note que la valeur de ΔG' de la composition A est sensiblement plus faible que celle de la composition T, ce qui traduit un état de dispersion de la silice de la composition A améliorée par rapport à celle de la composition T.

Tableau I

| Elastomère | Essai | caractérisations SEC | | | Caractérisation RMN | | | | caractérisation DSC |
|---|---|---|---|---|---|---|---|---|---|
| | | Mn (Kg/mol) | Ip | Taux de gel (%) | CCMA % $_{molaire}$ | Styrène % $_{molaire}$ | Butadiène % $_{molaire}$ | Répartition Styrène | Tg/delta |
| A | Essai 1 | 83 | 3,9 | <0.3 | 2,6 | 16.2 | 81,2 | 95/4/1/0 | -48/8 |
| B | Essai 2 | 89 | 2.7 | <0.3 | 10,4 | 14,5 | 75.2 | - | - |

Tableau II

| | Composition A | Composition T |
|---|---|---|
| M100 (MPa) | 3.70 | 1.18 |
| M300 (MPa) | 8.56 | 1.52 |
| M300/M100 | 2.32 | 1.29 |
| Déformation rupture (%) | 690 | 894 |
| ΔC (Cmax-Cmin) | 3.81 | 5.79 |
| ΔG' (0-100%) 60°C | 0.96 | 2.14 |

**Revendications**

1. Elastomère comprenant des unités monomères 1,3-diène et portant des fonctions carbonate pendantes situées en dehors des extrémités de chaîne de l'élastomère, les fonctions carbonate étant présentes dans des unités monomères d'un monomère vinylique au moins substitué par un groupe contenant un cycle 1,3-dioxolan-2-one.

2. Elastomère selon la revendication 1 dans lequel le monomère vinylique est un monomère vinylique contenant le groupe 2-oxo-1,3-dioxolan-4-yle de formule (I).

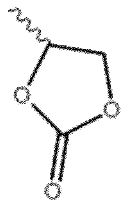

(I)

3. Elastomère selon l'une quelconque des revendications 1 à 2 dans lequel le monomère vinylique est un monomère (méth)acrylate de formule (II)

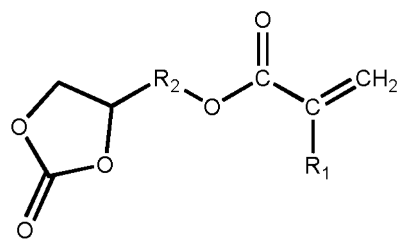

(II)

dans laquelle

$R_1$ est un hydrogène ou un méthyle,
$R_2$ est une chaîne hydrocarbonée pouvant être interrompue ou substituée par un ou plusieurs hétéroatomes.

4. Elastomère selon la revendication 3 dans lequel le monomère (méth)acrylate de formule (II) est choisi dans le groupe constitué par les composés de formule (III), (IV), (V) et leurs mélanges, est préférentiellement le composé de formule (III), le composé de formule (IV) ou leur mélange.

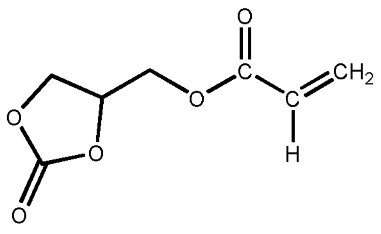

(III)

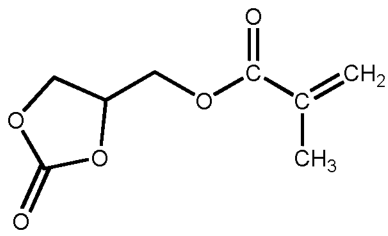

(IV)

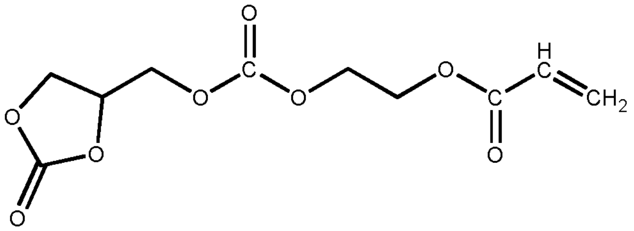

(V)

**5.** Elastomère selon l'une quelconque des revendications 1 à 4 dans lequel le taux de fonction carbonate est compris entre 0.1 et 20 moles pour 100 moles d'unités monomères constituant l'élastomère.

**6.** Elastomère selon l'une quelconque des revendications 1 à 5 dans lequel le monomère 1,3-diène est le 1,3-butadiène, l'isoprène ou leur mélange.

**7.** Elastomère selon l'une quelconque des revendications 1 à 6 dans lequel les unités du monomère 1,3-diène représentent plus de 50% en masse de l'élastomère.

**8.** Elastomère selon l'une quelconque des revendications 1 à 7, lequel élastomère contient des unités d'un monomère vinylaromatique, préférentiellement le styrène.

**9.** Elastomère selon la revendication 8 dans lequel les unités du monomère vinylaromatique représentent moins de 45% en masse de l'élastomère, de préférence moins de 35% en masse.

**10.** Elastomère selon l'une quelconque des revendications 1 à 9, lequel élastomère est un copolymère du 1,3-diène et du monomère vinylique ou un terpolymère du 1,3-diène, du monomère vinylique et du monomère vinylaromatique.

**11.** Procédé pour préparer l'élastomère défini à l'une quelconque des revendications 1 à 10 qui comprend la polymérisation radicalaire d'un mélange monomère contenant un monomère 1,3-diène, un monomère vinylique au moins substitué par un groupe contenant un cycle 1,3-dioxolan-2-one et le cas échéant d'un monomère vinylaromatique, lequel monomère vinylique au moins substitué par un groupe contenant un cycle 1,3-dioxolan-2-one est défini à l'une quelconque des revendications 1 à 4.

**12.** Procédé selon la revendication 11 dans lequel la polymérisation radicalaire est une polymérisation radicalaire en émulsion.

**13.** Procédé selon l'une quelconque des revendications 11 à 12 dans lequel le 1,3-diène est le 1,3-butadiène, l'isoprène ou leur mélange.

**14.** Procédé selon l'une quelconque des revendications 11 à 13 dans lequel le monomère vinylique au moins substitué par un groupe contenant un cycle 1,3-dioxolan-2-one est un méthacrylate de formule (II) défini à la revendication 3, de préférence un composé choisi dans le groupe constitué par les composés de formule (III), (IV), (V), (VI) et leurs mélanges définis à la revendication 4, de manière plus préférentielle le composé de formule (III), le composé de formule (IV) ou leur mélange.

**15.** Procédé selon l'une quelconque des revendications 11 à 14 dans lequel le monomère vinylaromatique est le styrène.

## Patentansprüche

1. Elastomer, das 1,3-Dienmonomereinheiten umfasst und außerhalb der Enden der Elastomerkette angeordnete seitenständige Carbonatfunktionen trägt, wobei die Carbonatfunktionen in Monomereinheiten eines Vinylmonomers, das mindestens durch eine einen 1,3-Dioxolan-2-onring enthaltende Gruppe substituiert ist, vorliegen.

2. Elastomer nach Anspruch 1, wobei es sich bei dem Vinylmonomer um ein Vinylmonomer mit der 2-Oxo-1,3-dioxolan-4-ylgruppe der Formel (I) handelt.

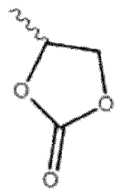
(I)

3. Elastomeren nach einem der Ansprüche 1 bis 2, wobei es sich bei dem Vinylmonomer um ein (Meth)acrylat-Monomer der Formel (II)

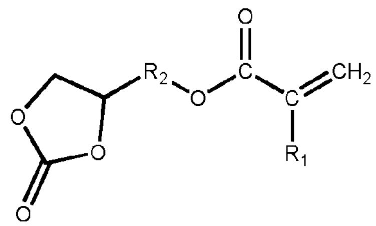
(II)

in der

$R_1$ für Wasserstoff oder Methyl steht,
$R^2$ für eine Kohlenwasserstoffkette, die durch ein oder mehrere Heteroatome unterbrochen oder substituiert sein kann, steht.

handelt.

4. Elastomer nach Anspruch 3, wobei das (Meth)-acrylat-Monomer der Formel (II) aus den Verbindungen der Formel (III), (IV), (V) und Mischungen davon ausgewählt ist und vorzugsweise die Verbindung der Formel (III), die Verbindung der Formel (IV) oder eine Mischung davon ist.

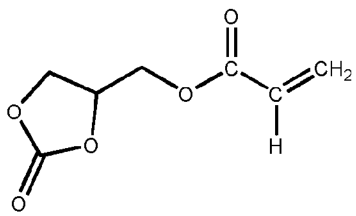
(III)

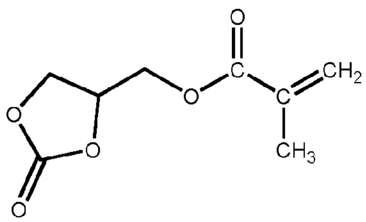
(IV)

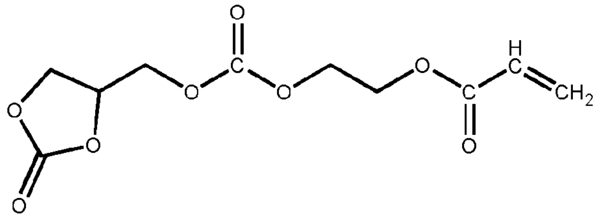

(V)

5. Elastomer nach einem der Ansprüche 1 bis 4, wobei der Gehalt an Carbonatfunktionen zwischen 0,1 und 20 mol pro 100 mol Monomereinheiten, aus denen das Elastomer aufgebaut ist, liegt.

6. Elastomer nach einem der Ansprüche 1 bis 5, wobei es sich bei dem 1,3-Dienmonomer um 1,3-Butadien, Isopren oder eine Mischung davon handelt.

7. Elastomer nach einem der Ansprüche 1 bis 6, wobei die 1,3-Dienmonomereinheiten mehr als 50 Massen-% des Elastomers ausmachen.

8. Elastomer nach einem der Ansprüche 1 bis 7, wobei das Elastomer Einheiten eines vinylaromatischen Monomers, vorzugsweise Styrol, enthält.

9. Elastomer nach Anspruch 8, wobei die vinylaromatischen Monomereinheiten weniger als 45 Massen-% des Elastomers, vorzugsweise weniger als 35 Massen-%, ausmachen.

10. Elastomer nach einem der Ansprüche 1 bis 9, wobei es sich bei dem Elastomer um ein Copolymer des 1,3-Diens und des Vinylmonomers oder ein Terpolymer des 1,3-Diens, des Vinylmonomers und des vinylaromatischen Monomers handelt.

11. Verfahren zur Herstellung des Elastomers gemäß einem der Ansprüche 1 bis 10, das die radikalische Polymerisation einer Monomerenmischung, die ein 1,3-Dienmonomer, ein Vinylmonomer, das mindestens durch eine einen 1,3-Dioxolan-2-onring enthaltende Gruppe substituiert ist, und gegebenenfalls ein vinylaromatisches Monomer enthält, umfasst, wobei das Vinylmonomer, das mindestens durch eine einen 1,3-Dioxolan-2-onring enthaltende Gruppe substituiert ist, in einem der Ansprüche 1 bis 4 definiert ist.

12. Verfahren nach Anspruch 11, wobei es sich bei der radikalischen Polymerisation um eine radikalische Emulsionspolymerisation handelt.

13. Verfahren nach einem der Ansprüche 11 bis 12, wobei es sich bei dem 1,3-Dienmonomer um 1,3-Butadien, Isopren oder eine Mischung davon handelt.

14. Verfahren nach einem der Ansprüche 11 bis 13, wobei es sich bei dem Vinylmonomer, das mindestens durch eine einen 1,3-Dioxolan-2-onring enthaltende Gruppe substituiert ist, um ein Methacrylat der Formel (II) gemäß Anspruch 3 handelt, vorzugsweise um eine Verbindung aus der Gruppe bestehend aus den Verbindungen der Formel (III), (IV), (V), (VI) und Mischungen davon gemäß Anspruch 4, weiter bevorzugt die Verbindung der Formel (III), die Verbindung der Formel (IV) oder eine Mischung davon.

15. Verfahren nach einem der Ansprüche 11 bis 14, wobei es sich bei dem vinylaromatischen Monomer um Styrol handelt.

## Claims

1. Elastomer comprising 1,3-diene monomer units and bearing pendant carbonate functions located outside the elastomer chain ends, the carbonate functions being present in monomer units of a vinyl monomer which is at least substituted with a group containing a 1,3-dioxolan-2-one ring.

2. Elastomer according to Claim 1, in which the vinyl monomer is a vinyl monomer containing the 2-oxo-1,3-dioxolan-4-yl group of formula (I).

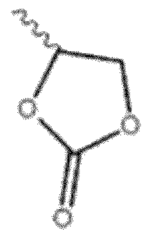

(I)

3. Elastomer according to either one of Claims 1 and 2, in which the vinyl monomer is a (meth)acrylate monomer of formula (II)

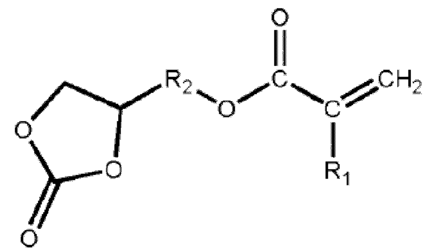

(II)

in which

$R_1$ is a hydrogen or a methyl,
$R^2$ is a hydrocarbon-based chain which can be interrupted or substituted with one or more heteroatoms.

4. Elastomer according to Claim 3, in which the (meth)-acrylate monomer of formula (II) is chosen from the group consisting of the compounds of formulae (III), (IV) and (V) and mixtures thereof, and is preferentially the compound of formula (III) or the compound of formula (IV) or a mixture thereof.

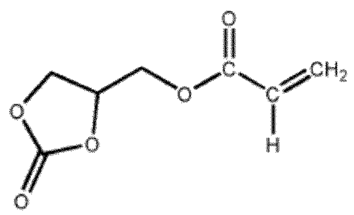

(III)

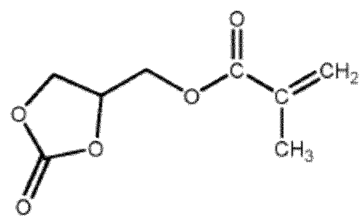

(IV)

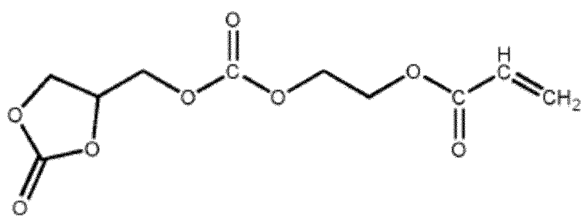

(V)

5. Elastomer according to any one of Claims 1 to 4, in which the carbonate function content is between 0.1 and 20 mol per 100 mol of monomer units constituting the elastomer.

6. Elastomer according to any one of Claims 1 to 5, in which the 1,3-diene monomer is 1,3-butadiene, isoprene or a mixture thereof.

7. Elastomer according to any one of Claims 1 to 6, in which the units of the 1,3-diene monomer represent more than 50% by weight of the elastomer.

8. Elastomer according to any one of Claims 1 to 7, in which the elastomer contains units of a vinylaromatic monomer,

preferentially styrene.

**9.** Elastomer according to Claim 8, in which the units of the vinylaromatic monomer represent less than 45% by weight of the elastomer, preferably less than 35% by weight.

**10.** Elastomer according to any one of Claims 1 to 9, which elastomer is a copolymer of the 1,3-diene and of the vinyl monomer or a terpolymer of the 1,3-diene, of the vinyl monomer and of the vinylaromatic monomer.

**11.** Process for producing the elastomer defined in any one of Claims 1 to 10, which comprises the radical polymerization of a monomer mixture containing a 1,3-diene monomer, a vinyl monomer which is at least substituted with a group containing a 1,3-dioxolan-2-one ring and, where appropriate, a vinylaromatic monomer, which vinyl monomer which is at least substituted with a group containing a 1,3-dioxolan-2-one ring is defined in any one of Claims 1 to 4.

**12.** Process according to Claim 11, in which the radical polymerization is a radical emulsion polymerization.

**13.** Process according to either one of Claims 11 and 12, in which the 1,3-diene is 1,3-butadiene, isoprene or a mixture thereof.

**14.** Process according to any one of Claims 11 to 13, in which the vinyl monomer which is at least substituted with a group containing a 1,3-dioxalan-2-one ring is a methacrylate of formula (II) defined in Claim 3, preferably a compound chosen from the group consisting of the compounds of formulae (III), (IV), (V) and (VI) and mixtures thereof defined in Claim 4, more preferentially the compound of formula (III), the compound of formula (IV) or a mixture thereof.

**15.** Process according to any one of Claims 11 to 14, in which the vinylaromatic monomer is styrene.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2001090237 A
- US 20070191578 A
- WO 2014032803 A


### Littérature non-brevet citée dans la description


- groupe pendant. *IUPAC, PAC,* 1996, vol. 68, 2287